# EUROPEAN PATENT APPLICATION

(11) **EP 1 044 862 A1**
(43) Date of publication of application: **18.10.2000**
(21) Application number: 00101893.6
(22) Date of filing: 31.01.2000
(51) Int. Cl.: B62D 5/22

(54) **Adjustable steering mechanism assembly for automotive vehicles**

(30) Priority: 12.04.1999 AR 1001670; 17.06.1999 AR 1002911
(71) Applicant: Visteon Automotive Systems Inc., Dearborn, MI 48126 (US)
(72) Inventor: Ballester, Adrián, 1667 Buenos Aires (AR)
(74) Representative: Kador & Partner

(57) **Abstract**

A pinion adjustable assembly for steering mechanisms for automotive vehicles, of a pinion-rack bar type, for avoiding pounding effects and bothersome noises. Steering mechanisms usually presents drawbacks related with wearing out effects on assembled teeth of pinion-rack bar (3) set as well as due to axial stresses in articulations producing noises and pounding effects during driving. In order to overcome these drawbacks the present invention purposes a novel assembly for pinion-rack set incorporating in pinion casing housing (2) a tubular cylindrical bushing (7) with free angular displacement inside said housing (2) and related to an angular positioning nut (11) having said bushing (7) an eccentric inner wall (7'') with regard to outer wall surface (7') surrounding a pinion-carrying part related to vehicle's steering column. Angular displacement of said bushing (7) by angular varying its eccentricity, approaches pinion (4) to rack bar (3) for overcoming wearing out effect on teeth. For absorbing movements in assembly relationship, rubber rings are incorporated in pinion axis holder.

## Description

### Field of the invention

The present invention is referred to improvements in power assisted steering mechanisms assembly for automotive vehicles, particularly for conventional rack bar-pinion mechanisms. Said improvements are addressed to improve the assembly relationship between teeth of said pinion-and-rack set. More particularly, a new adjustable assembly between said teeth is purposed for avoiding bothersome noises and knocking effects.

The main object of the present invention is related to improve the above cited pinion-rack bar mechanisms so as to be able to adjust in a fast and easy way the relative position of teeth linkage points of pinion-and-rack bar assembly. Said linkage points should usually be adjusted due to improper axial movements or wear effects on pinion and rack bar teeth.

Another object of the present invention is referred to a novel pinion assembly of a steering mechanism that allows a periodical adjustment of pinion-rack bar assembly relationship so that transmission movements from vehicle's steering wheel wherein rotational movement of steering wheel is converted in to reciprocal linear movement of rack, results on a soft and free of noises driving.

Another object of the present invention resides on incorporating in steering mechanisms a selectively adjustable assembly of pinion-rack bar set inside a rack casing integral to rack bar casing. The angular shifting of said mechanism avoids an excessive clearance in the pinion-rack bar assembly and allows a radial set of pinion for a proper transmission movement. Improper variations of said pinion clearance acts against a uniform assembly relationship.

It is a still a further object of the present invention incorporating inside said casing, fixed to rack bar casing, a tubular sleeve or bushing whose cylindrical outer surface is eccentric and coaxial to said pinion casing and whose inner surface is cylindrical with regard to said bushing forming said inner surface of said bushing a lodging space of a tubular rack for retaining purposes allowing the torsional pinion movement, concentric to the concentric inner surface of said tubular sleeve or bushing and capable of being radial moved in response to angular shifting of said bushing inside said casing achieving a proper positioning of pinion and rack bar teeth by adjusting the eccentricity of said bushing outer surface.

Another object of the present invention resides on improvements which comprise a tubular sleeve or bushing having an outer surface eccentric with regard to a rack casing, provided with an upper end flange for manually or mechanically varying its outer eccentricity. It is also provided with an inner end nut for fixing it in a proper position against said casing. At the same time said rack engaged to said pinion includes an outer elastic buckling seal for resting against said inner concentric surface of said tubular sleeve or bushing for absorbing eccentricity differences of this bushing when it is rotated for compensating assembly differences and for maintaining said rack in contact against said concentric inner surface.

Finally, another object of the present invention is referred to improvements in steering mechanism casings offering the possibility of positioning the pinion by a simple angular displacement of a tubular sleeve or bushing when any excessive clearance in the assembly relationship is detected due to teeth wear effects or manufacturing assembly failures.

### Background of the Invention

One of the most important requirements for steering mechanisms for automotive vehicles, particularly pinion-rack bar power-assisted mechanisms, is offering and stable steering means with a perfect transmission movement between pinion and rack bar, obtained by a proper teeth assembly in tangency or contact points. This is achieved by mounting said components within established limits of tolerances. Sometimes, said tolerances are out of established limits during manufacturing process thus creating an undesirable clearance between teeth whose correction usually involves additional complicated and time-consuming operations.

Moreover, the wearing out effect on steering teeth attempt against a proper assembly relationship since clearance between teeth creates bothersome noises determining an improper and dangerous driving of vehicle.

An improper functioning of pinion-and-rack bar set is obtained when teeth are worn out, and this is created by axial stresses present in the articulations of the steering housings. These stresses tend to urge the rack into a position distant from and out of proper assembly with the pinion. Thus these stresses creates an action against integral means of said casing appointed to maintain pinion and rack bar teeth into tight engagement and regulate positioning assembly of them.

The above cited teeth clearance is usually solved or compensated by applying previous stresses to pinion roller bearing and rack bar dampening by using an adjustment washer and pushing spring defining an approaching action between pinion and rack bar for a proper assembly relationship.

Proper alignment and adjustment during manufacturing process of this mechanism, as well as wearing out corrections of the assembly relationship between pinion and rack bar, is so much difficult due to the method used based on elastic well-balanced means.

This problem is hard to be solved and sometimes derives on replacement of the complete steering unit since improper assembly relationship is not completely overcome.

### Abstract of the Invention

The purposed invention is related to improvements in a power-assisted steering mechanism casing for obtaining a proper adjustment in the assembly relationship between pinion and rack bar of said mechanism. In order to achieve said goal, a novel assembly with new improved characteristics is purposed for pinion inside said casing which is conventionally fixed traversal to the rack bar casing. By using the purposed invention said pinion could be fixed to the torque bar of vehicle's steering column in an assembly relationship with said rack bar.

This assembly offers the possibility of defining a selective regulation of pinion axial positioning with regard to the rack bar and in response to teeth improper clearance generated by deficient adjustment during assembly of said casing or by a functional wear effect on said assembled means, thus compensating assembly differences and avoiding undesirable pounding effects on steering command during driving.

Said adjustment is achieved by incorporating a bushing or sleeve telescopically assembled inside said casing and fixed to the rack bar casing with free angular clearance having this bushing an upper flange for resting on the upper edge of said rack, and an outer thread in its lower edge for a roller nut against the lower edge for fixing said bushing in a proper position.

This bushing or tubular sleeve having a cylindrical outer surface coaxial to the rack inner surface, and an inner surface eccentric with regard to the outer surface of said bushing delimits a lodging space of a tubular retention and torsional supporting rack for torque bar end which is related to the powered valve of vehicle's steering column.

Lower end of said tubular rack is hold or retained against a bushing or sleeve by a "seeger" type washer which avoids axial movements of said rack but allows angular displacements of same in response to torsional loading leaving said rack in contact to the eccentric surface of said bushing through end resilient buckling washers which allow a frictional contact with said surface.

By unscrewing the lower retention nut of said bushing an angular displacement of bushing is allowed and therefore the eccentricity of bushing inner surface could be varied transversely with regard to the axis of same, generating a repositioning movement of torque bar axis as well as a pinion approaching to rack bar thus obtaining a desired adjustment of teeth clearance.

### Brief description of drawings

Figure 1 represents a general plan view of a pinion-rack bar mechanism of a power-assisted steering incorporating the improvements of the present invention.
Figure 2 represents a schematically cross sectional through line 1-1 of Figure 1 showing the particular assembly of the present invention.
Figure 3 shows another schematically sectional view along line 11-11 of Figure 1 showing bushing eccentricity as well as the functional relationship with regard to tubular rack of torque bar end including the pinion.
Figure 4 shows a schematically plan view of another embodiment of a power steering mechanism for automotive vehicles incorporating the novel assembly of the present invention.
Figure 5 shows a schematically longitudinal section view of the purposed assembly of Figure 4 inside a casing housing of said mechanism; finally:
Figure 6 shows a traverse sectional view through line 1-1 line of Figure 5 showing bushing eccentricity.

### Description of the preferred embodiments

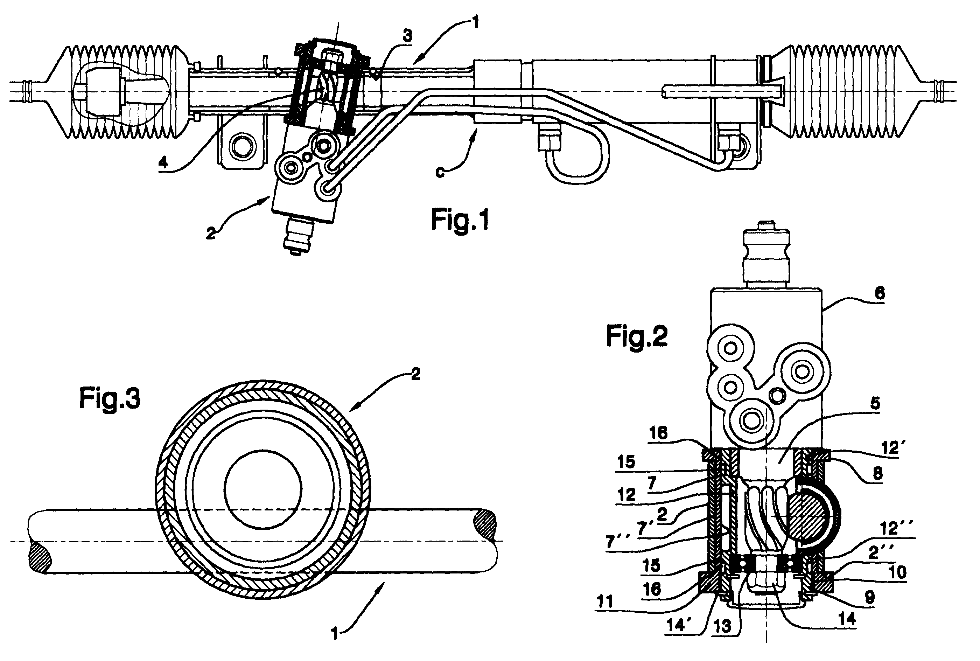

As illustrated in Figures 1-3 the improvements purposed by the present invention comprise a powered steering mechanism incorporated in a casing (c) (see Figure 1) comprising as is already known in the art a rack bar casing 1 and a casing 2, traversal arranged with regard to said casing 1 where rack bar 3 is mounted in relation with pinion 4 integral with torque bar 5 which in turn drives valve means 6 of steering column 6. These components are not described in detail as they are known in the steering mechanisms art.

In accordance to the present invention, casing 2 includes a particular assembly for adjusting teeth assembly relationship of rack bar 2 and pinion 4 as is clearly shown in figures 2 and 3.

Said teeth assembly is defined by a tubular sleeve or bushing 7 telescopically arranged in said rack casing 2 for allowing angular displacement of said bushing with regard to the inner surface of rack 2.

Said tubular sleeve or bushing 7 includes an outer cylindrical surface 7' concentric and coaxial arranged with regard to casing 2, and an inner surface 7'' eccentrically arranged with regard to outer surface 7'. This bushing 7 having a variable thickness wall as is clearly shown in figure 3.

Said bushing 7 also presents an upper holding flange 8 against upper edge 2' of rack 2 and a lower projecting end portion 9 which is projected from inner edge 2'' of rack 2, including a thread 10 for screwing in a fixing nut 11 of bushing 7 against said lower edge 2'' of rack 2. Thus, this nut 11 allows fastening said bushing 7 in an angular desired position.

Inside bushing 7 a tubular rack 12 is arranged, concentrically arranged with regard to cylindrical lower surface 7'' which in turn is concentrically arranged with regard to outer surface 7'. This rack 12 is fasten to torque bar 5 through its upper end including a bearing 13 in its lower end for torque bar end 5, that is fasten by a nut 14 so that said bearing 13 absorbs torsional stresses when the steering mechanism is driven by rotational movements of vehicle's steering wheel.

Tubular rack 12 is fasten against bearing lower end by a "seeger" type washer 14 having rack 12 annular ridges 12'-12'' with annular grooves 15 for respective square-cross section elastic buckling seals 16 permanently rested against eccentric cylindrical inner surface 7'' of bushing 7.

Regulation of between-teeth clearance of rack bar 3 and pinion 4 is achieved as follows: nut 11 is unscrew so that bushing 7 is freed. Trough upper flange 8 bushing 7 may be angular moved provoking a positioning movement of eccentric cylindrical inner surface 7'' with regard to casing 2 (See figure 3).

Said positioning movement produces a tubular rack radial movement which is fasten to torque bar 5 varying the assembly relationship of pinion teeth with regard to rack bar teeth.

As could be appreciated from the attached figures, the assembly regulation is produced by varying the eccentricity of inner surface 7'' of bushing 7 provoking the radial dragging of rack 12.

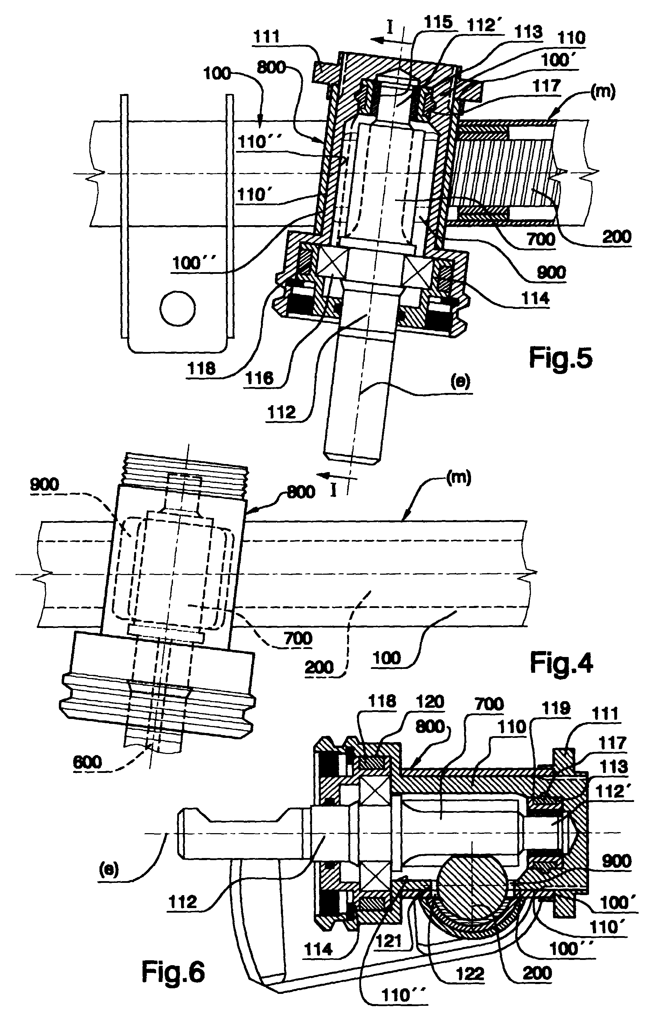

### Description of an alternative embodiment illustrated in figures 4-6

Reference will now be done to figures 4-6 in which an alternative embodiment of the present invention is illustrated.

In accordance with the attached drawings, particularly with reference to figure 4, a power steering mechanism (m) is shown which comprises a rack bar casing 100 where the rack bar 200 is assembled, in relation with a pinion (not illustrated) of a powering cylinder feeding by conduits from valve related to a vehicle's steering column through a torque bar 600. Said torque bar 600 includes a pinion 700 assembled inside casing housing 800 which forms integral part of the rack bar casing 100 and having an aperture 900 through which pinion 700 and rack bar 200 are assembled.

In accordance with the present alternative embodiment of the present invention, inside casing housing 100 is concentrically assembled a cylindrical tubular bushing 110 which is projected from upper flange 100' of casing housing 100 and which is related to a rotating dragging nut 111 for dragging bushing 110. Said "dragging" action is achieved by manually driven said nut 111.

Bushing 110 having a cylindrical lateral surface 110' with a free rotating contact against inner surface 100'' of casing housing 100 and an inner surface 110'' eccentric with regard to the bushing axis (e).

Inside said bushing 110 is freely mounted a portion 112' of piece 112 which includes supporting racks 113 and 114 for torque bar 106 formed by bushing 115 and bearing 116, supported on rubber rings 117 and 118 of proper hardness in seats 119 and 120 of piece 112 leaving pinion 107 arranged between seats 119-120. Casing wall 110 and piece 112 having apertures 121-122 coincident with aperture 109 of housing wall 100, for relating pinion 107 and rack bar 102.

The way in which pinion 107 is regulated is by screwing or unscrewing nut 111 determining a radial variation of inner surface 110' eccentricity of bushing 110 producing a radial movement of piece 112 approaching pinion 107 to rack bar 102 in order to achieve a proper assembly relationship between them when an excessive clearance between teeth is detected.

Moreover, rings 117 and 118 made of elastic buckling material, absorb little differences between pinion and rack bar 107-102 eliminating noises and pounding usually found in this kind of mechanisms.

## Claims

1. Improvements in power steering mechanisms for automotive vehicles, comprising a rack bar casing with end racks for fixing same to vehicle chassis and a tubular cylindrical rack casing of opened ends, traversal to said casing, for lodging a pinion in assembly relationship with said rack bar lodged in said casing, being said pinion fasten to a torque bar end related to valve means of the vehicle's steering column, for driven assistance fluid in response to a vehicle's steering wheel rotation, being mounted inside casing means for positioning said pinion with said rack bar in response to undesirable between-teeth clearance; characterized said improvements because said means for positioning said pinion in its assembly relationship with rack bar being formed by torque bar end assembly which presents a rack mounted inside said bushing, delimiting said rack a lodging space of said casing and which is telescopically arranged inside said casing with angular free movement, having said bushing an upper supporting flange on upper edge from said casing and a lower end portion with a fixing nut against lower edge of casing, having said bushing a concentric cylindrical inner surface and a cylindrical inner surface eccentric with regard to outer surface of same, delimiting said lodging space of said torque bar rack and having in turn end surfaces in contact to said eccentric cylindrical outer surface, defining pushing and radial positioning means for regulating pinion positioning in relation to said rack bar.

2. Adjusting assembly for power pinion-and-rack bar steering mechanisms for automotive vehicles, comprising a rack bar casing with fixing ends to vehicle's chassis and a tubular cylindrical casing rack of opened ends, and traversal arranged to said casing, for lodging a pinion in assembly relationship with said rack bar lodged in said casing, being said pinion fasten to a torque bar end related to valve means of the vehicle's steering column, for driven assistance fluid in response to a vehicle's steering wheel rotation, being mounted inside casing rack means for positioning assembly relationship of said pinion with regard to said rack bar in response to undesirable between-teeth clearance; *characterized* because said means for positioning said pinion in its assembly relationship with said rack bar being formed by torque bar end assembly which presents a rack mounted inside a bushing, delimiting a rack lodging space of said rack and which is telescopically arranged inside said casing rack with angular free movement, having said bushing an upper supporting flange on upper edge of said casing rack and a lower end portion with a fixing nut against lower edge of casing rack, having said bushing a concentric cylindrical inner surface and a cylindrical inner surface eccentric with regard to outer surface of same, delimiting said lodging space of said torque bar rack and having in turn end surfaces in contact to said eccentric cylindrical outer surface, defining pushing and radial positioning means for regulating pinion positioning in relation to said rack bar.
